# EUROPEAN PATENT APPLICATION

(11) **EP 3 007 365 A1**
(43) Date of publication of application: **13.04.2016**
(21) Application number: 14807406.5
(22) Date of filing: 04.06.2014
(51) Int. Cl.: H04B 5/02, G06Q 20/16, G06Q 40/04

(54) **SECURE INFORMATION INTERACTION METHOD FOR ELECTRONIC RESOURCES TRANSFER**

(30) Priority: 06.06.2013 CN 201310222492
(71) Applicant: China Unionpay Co., Ltd, Shanghai 200135 (CN)
(72) Inventor: CHAI, Hongfeng, Shanghai 200135 (CN); XU, Yanjun, Shanghai 200135 (CN); LI, Wei, Shanghai 200135 (CN); LI, Jie, Shanghai 200135 (CN); WU, Shuijiong, Shanghai 200135 (CN)
(74) Representative: Berkenbrink, Kai-Oliver
(86) International application number: PCT/CN2014/079145
(87) International publication number: WO 2014/194822

(57) **Abstract**

The invention proposes a security information interaction method. In the method, a first security information interaction terminal executes a security information interaction procedure based on a direct data communication with a second security information interaction terminal in the form of near field communication so as to realize the transfer of electronic resources. The security information interaction method disclosed by the invention can achieve a direct transfer of electronic resources between security information interaction terminals and has a high safety and reliability.

## Description

### FIELD OF THE INVENTION

The invention relates to information interaction method, and in particular, to a security information interaction method for electronic resource transfer.

### BACKGROUND

Currently, with the increasing development of network application (especially the mobile network) and increasing abundance of business types in different fields, the interaction of security information (i.e., the information that is highly demanding on security) related to transfer of electronic resource is becoming more and more important.

Existing security information interaction methods related to transfer of electronic resource are typically used only for security information interaction in a form of field offline (e.g., applying electronic cash in a form of field offline by means of financial mechanisms), and thus are difficult to achieve a direct transfer of electronic resource between security information interaction terminals (e.g., mobile terminals).

Therefore, there exists a need for a security information interaction method that can achieve a direct transfer of electronic resource between security information interaction terminals and has a high safety and reliability.

### SUMMARY OF THE INVENTION

In order to address the existing problems in the above prior art solutions, the invention proposes a security information interaction method that can achieve a direct transfer of electronic resource between security information interaction terminals and has a high safety and reliability.

The object of the invention is achieved by the following technical solutions:
a security information interaction method including the following steps:
   (A1) a first security information interaction terminal constituting a security information interaction request based on a security information interaction instruction from a resource transfer-out party and transmitting the security information interaction request to a second security information interaction terminal via a first communication channel, wherein the security information interaction request comprises the following information: the amount of the electronic resources to be transferred and an electronic resource identifier of the resource transfer-out party;
   (A2) the second security information interaction terminal processing the received security information interaction request and returning a security information interaction response based on the processing result, wherein the security information interaction response comprises an electronic resource identifier of the resource transfer-in party;
   (A3) the first security information interaction terminal communicating with a first secure carrier based on the security information interaction response and via a second communication channel so as to constitute a security information interaction message, and transmitting the security information interaction message to a data processing server so as to complete the subsequent security information interaction procedure and achieve the transfer of electronic resources, wherein the security information interaction message comprises the information required for executing the subsequent security information interaction procedure.

Preferably, in the above described technical solutions, the first communication channel is a communication channel based on near field communication protocol.

Preferably, in the above described technical solutions, the first security information interaction terminal acquires the information required for executing the subsequent security information interaction procedure from the first secure carrier via the second communication channel.

Preferably, in the above described technical solutions, the first security information interaction terminal and the second security information interaction terminal are both mobile terminals.

Preferably, in the above described technical solutions, the step (A3) further includes: the data processing server analyzing the received security information interaction message and executing an offline verification and determination operation; if the result of the offline verification and determination operation is "approving the transfer of electronic resources to be executed", an approval response is returned to the first security information interaction terminal; otherwise, a rejection response is returned to the first security information interaction terminal.

Preferably, in the above described technical solutions, the step (A3) further includes: if the approval response is received, the first security information interaction terminal conducts data communication with the first security carrier via the second communication channel so as to execute an operation related to the transfer-out of electronic resources in an offline manner and acquire a corresponding security information interaction certificate, and if a rejection response is received, the first security information interaction terminal terminates the security information interaction procedure and informs the user of the failure of security information interaction.

Preferably, in the above described technical solutions, the step (A3) further includes: after the operation related to transfer-out of electronic resources is executed, the first security information interaction terminal transmits a transfer-out operation success response to the data processing server, wherein the transfer-out operation success response comprises the security information interaction certificate and the electronic resource identifier of the resource transfer-in party.

Preferably, in the above described technical solutions, the step (A3) further includes: after receiving the transfer-out operation success response, the data processing server records the information related to current security information interaction and sets the status of this record to be "unfinished", and sends a security information interaction response to a first service provider server, wherein the security information interaction response comprises the information related to current security information interaction, and the data processing server then sends a resource transfer-in notification to the second security information interaction terminal.

Preferably, in the above described technical solutions, the step (A3) further includes: after receiving the resource transfer-in notification, the second security information interaction terminal sends a security information interaction record enquiry/synchronization request to the data processing server so as to acquire the security information interaction record whose status is "unfinished".

Preferably, in the above described technical solutions, the step (A3) further includes: after acquiring the security information interaction record whose status is "unfinished", the second security information interaction terminal sends a secure carrier electronic resource synchronization request to the data processing server for the security information interaction record whose status is "unfinished", wherein the secure carrier electronic resource synchronization request at least comprises the electronic resource identifier of the resource transfer-in party.

Preferably, in the above described technical solutions, the step (A3) further includes: after receiving the secure carrier electronic resource synchronization request, the data processing server sends a secure carrier electronic resource synchronization response to the second security information interaction terminal, wherein the secure carrier electronic resource synchronization response comprises the amount value of electronic resources to be transferred-in with a tamper-proofing protection.

Preferably, in the above described technical solutions, the step (A3) further includes: after receiving the secure carrier electronic resource synchronization response, the second tamper information interaction terminal conducts data communication with a second secure carrier via a third communication channel so as to acquire the information related to electronic resource transfer-in, and then sends the information related to electronic resource transfer-in and the amount value of electronic resources to be transferred-in with a tamper-proofing protection to the data processing server.

Preferably, in the above described technical solutions, the step (A3) further includes: after receiving the information related to electronic resource transfer-in and the amount value of electronic resources to be transferred-in with a tamper-proofing protection, the data processing server constitutes an electronic resource transfer-in request message based on the information related to electronic resource transfer-in and the amount value of electronic resources to be transferred-in with a tamper-proofing protection, and sends the electronic resource transfer-in request message to a second service provider server.

Preferably, in the above described technical solutions, the step (A3) further includes: after receiving the electronic resource transfer-in request message, the second service provider server executes a determination operation based on the electronic resource transfer-in request message; if the result of the determination operation is "approving the transfer of electronic resources to be executed", an electronic resource balance value is extracted from the information related to electronic resource transfer-in, a new electronic resource balance value is calculated from the electronic resource balance value and the amount value of the electronic resources to be transferred-in, an updated script of the electronic resource balance value is generated based on the new electronic resource balance value, and then the updated script of the electronic resource balance value is sent to the data processing server.

Preferably, in the above described technical solutions, the step (A3) further includes: after receiving the updated script of the electronic resource balance value, the data processing server forwards it to the second security information interaction terminal; after receiving the updated script of the electronic resource balance value, the second security information interaction terminal forwards it to the second secure carrier; and after receiving the updated script of the electronic resource balance value, the second secure carrier executes the updated script of the electronic resource balance value so as to update the electronic resource balance value, and sends the result of script execution back to the second security information interaction terminal.

Preferably, in the above described technical solutions, the step (A3) further includes: after receiving the result of script execution, the second security information interaction terminal forwards it to the data processing server; after receiving the result of script execution, the data processing server forwards it to the second service provider server, and sends an electronic resource transfer success notification to the first security information interaction terminal.

Preferably, in the above described technical solutions, the data processing server calculates a verification code for the amount of electronic resources to be transferred, and combines the verification code and a plain text of the amount of electronic resources to be transferred together so as to form the amount value of electronic resources to be transferred-in with a tamper-proofing protection.

The security information interaction method disclosed by the invention has the following advantages: (1) a direct transfer operation of electronic resources can be executed between security information interaction terminals (especially mobile terminals); and (2) a high safety and a high reliability are ensured.

### BRIEF DESCRIPTION OF THE DRAWINGS

The technical features and advantages of the invention will be better understood by those skilled in the art with reference to the drawings, in which:

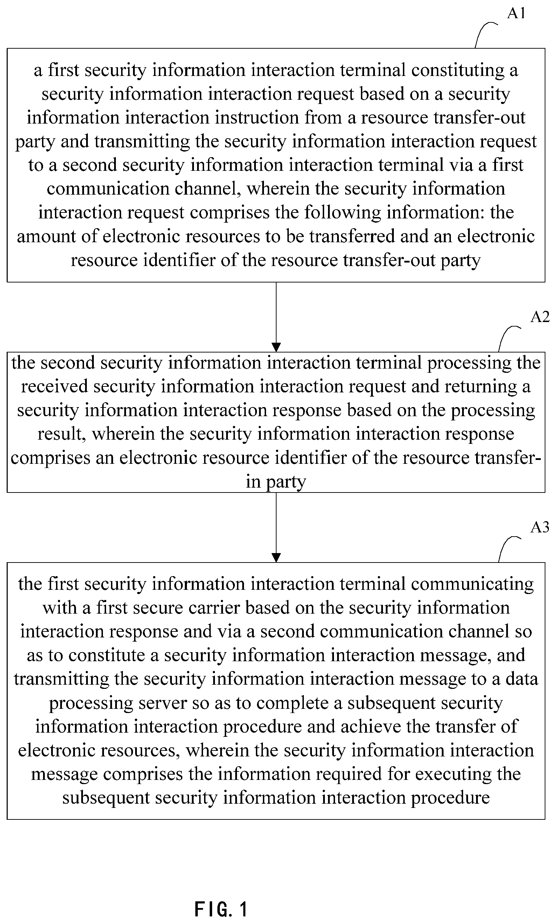

Fig. 1 is a flowchart of the security information interaction method according to an embodiment of the invention.

### DETAILED DESCRIPTION OF THE UTILITY MODEL

Fig. 1 is a flowchart of the security information interaction method according to an embodiment of the invention. As show in Fig. 1, the security information interaction method disclosed by the invention includes the following steps: (A1) a first security information interaction terminal constituting a security information interaction request based on a security information interaction instruction from a resource transfer-out party (e.g., a payer in a payment transaction) and transmitting the security information interaction request to a second security information interaction terminal via a first communication channel, wherein the security information interaction request comprises the following information: the amount of electronic resources to be transferred (e.g., currency amount of a transaction) and an electronic resource identifier of the resource transfer-out party (e.g., an electronic cash account of the payer party); (A2) the second security information interaction terminal processing the received security information interaction request and returning a security information interaction response based on the processing result, wherein the security information interaction response comprises an electronic resource identifier of the resource transfer-in party (e.g., an electronic cash account of the payee party); (A3) the first security information interaction terminal communicating with a first secure carrier (i.e., an carrier that can store and run a secure application for executing security information interaction procedure, e.g., SIM card, smart SD card, etc.) based on the security information interaction response and via a second communication channel so as to constitute a security information interaction message, and transmitting the security information interaction message to a data processing server (e.g., a payment platform in financial field) so as to complete a subsequent security information interaction procedure and achieve the transfer of electronic resources, wherein the security information interaction message comprises the information required for executing the subsequent security information interaction procedure (e.g., electronic cash application data in the first secure carrier).

Preferably, in the security information interaction method disclosed by the invention, the first communication channel is a communication channel based on near field communication protocol (e.g., NFC protocol).

Preferably, in the security information interaction method disclosed by the invention, the first security information interaction terminal acquires the information required for executing the subsequent security information interaction procedure (e.g., electronic cash application data in the first secure carrier) from the first secure carrier (i.e., a secure carrier of the resource transfer-out party) via the second communication channel.

By way of example, in the security information interaction method disclosed by the invention, the first security information interaction terminal and the second security information interaction terminal are both mobile terminals (e.g., cell-phone).

Preferably, in the security information interaction method disclosed by the invention, the step (A3) further includes: the data processing server analyzing the received security information interaction message and executing an offline verification and determination operation; if the result of the offline verification and determination operation is "approving the transfer of electronic resources to be executed", an approval response is returned to the first security information interaction terminal; otherwise, a rejection response is returned to the first security information interaction terminal.

Preferably, in the security information interaction method disclosed by the invention, the step (A3) further includes: if the approval response is received, the first security information interaction terminal conducts data communication with the first secure carrier via the second communication channel so as to execute the operation related to the transfer-out of electronic resources in an offline manner (e.g., offline payment cut) and acquire a corresponding security information interaction certificate; and if a rejection response is received, the first security information interaction terminal terminates the security information interaction procedure and informs the user of the failure of security information interaction.

Preferably, in the security information interaction method disclosed by the invention, the step (A3) further includes: after the operation related to the transfer-out of electronic resources is executed, the first security information interaction terminal transmits a transfer-out operation success response to the data processing server, wherein the transfer-out operation success response comprises the security information interaction certificate and the electronic resource identifier of the resource transfer-in party (e.g., the electronic cash account of the payee party)

Preferably, in the security information interaction method disclosed by the invention, the step (A3) further includes: after receiving the transfer-out operation success response, the data processing server records the information related to current security information interaction (e.g., current transaction information) and sets the status of this record to be "unfinished", and sends a security information interaction response to a first service provider server (e.g., an issuing bank of the payer party's card), wherein the security information interaction response comprises the information related to current security information interaction (e.g., current transaction information), and the data processing server then sends a resource transfer-in notification to the second security information interaction terminal (e.g., sending an account transfer-in notification in the form of short message).

Preferably, in the security information interaction method disclosed by the invention, the step (A3) further includes: after receiving the resource transfer-in notification, the second security information interaction terminal sends a security information interaction record enquire/synchronization request to the data processing server so as to acquire the security information interaction record whose status is "unfinished".

Preferably, in the security information interaction method disclosed by the invention, the step (A3) further includes: after acquiring the security information interaction record whose status is "unfinished", the second security information interaction terminal sends a secure carrier electronic resource synchronization request (e.g., an electronic cash balance synchronization transaction request from a smart card) to the data processing server for the security information interaction record whose status is "unfinished", wherein the secure carrier electronic resource synchronization request at least comprises the electronic resource identifier of the resource transfer-in party.

Preferably, in the security information interaction method disclosed by the invention, the step (A3) further includes: after receiving the secure carrier electronic resource synchronization request, the data processing server sends a secure carrier electronic resource synchronization response to the second security information interaction terminal, wherein the secure carrier electronic resource synchronization response comprises the amount value of electronic resources to be transferred-in with a tamper-proofing protection (e.g., transferred-in amount information).

Preferably, in the security information interaction method disclosed by the invention, the step (A3) further includes: after receiving the secure carrier electronic resource synchronization response, the second security information interaction terminal conducts data communication with a second secure carrier (i.e., a secure carrier of the resource transfer-in party) via a third communication channel so as to acquire the information related to electronic resource transfer-in (e.g., electronic cash application data and balance in the second secure carrier), and then sends the information related to electronic resource transfer-in and the amount value of electronic resources to be transferred-in with a tamper-proofing protection to the data processing server.

Preferably, in the security information interaction method disclosed by the invention, the step (A3) further includes: after receiving the information related to electronic resource transfer-in and the amount value of electronic resources to be transferred-in with a tamper-proofing protection, the data processing server constitutes an electronic resource transfer-in request message based on the information related to electronic resource transfer-in and the amount value of electronic resources to be transferred-in with a tamper-proofing protection, and sends the electronic resource transfer-in request message to a second service provider server (e.g., an issuing bank of the payee party' card).

Preferably, in the security information interaction method disclosed by the invention, the step (A3) further includes: after receiving the electronic resource transfer-in request message, the second service provider server executes a determination operation based on the electronic resource transfer-in request message; and if the result of the determination operation is "approving the transfer of electronic resources to be executed", an electronic resource balance value (e.g., electronic cash balance) is extracted from the information related to electronic resource transfer-in, and then a new electronic resource balance value (which is the sum of the electronic resource balance value and the amount value of electronic resources to be transferred-in, e.g., a new electronic cash balance) is calculated from the electronic resource balance value and the amount value of electronic resources to be transferred-in, and au updated script of the electronic resource balance value is generated based on the new electronic resource balance value, and the updated script of the electronic resource balance value is sent to the data processing server.

Preferably, in the security information interaction method disclosed by the invention, the step (A3) further includes: after receiving the updated script of the electronic resource balance value, the data processing server forwards it to the second security information interaction terminal; after receiving the updated script of the electronic resource balance value, the second security information interaction terminal forwards it to the second secure carrier; and after receiving the updated script of the electronic resource balance value, the second secure carrier executes the updated script of the electronic resource balance value so as to update the electronic resource balance value (that is, using the new electronic resource balance value as the current effective electronic resource balance value), and sends the result of script execution back to the second security information interaction terminal.

Preferably, in the security information interaction method disclosed by the invention, the step (A3) further includes: after receiving the result of script execution, the second security information interaction terminal forwards it to the data processing server; after receiving the result of script execution, the data processing server forwards it to the second service provider server, and sends an electronic resource transfer success notification to the first security information interaction terminal (e.g., sending a transaction success result notification in the form of short message).

Preferably, in the security information interaction method disclosed by the invention, the data processing server calculates a verification code for the amount of the electronic resources to be transferred, and combines the verification code and a plain text of the amount of electronic resources to be transferred together so as to form the amount value of electronic resources to be transferred-in with a tamper-proofing protection.

As can be seen from the above, the security information interaction method disclosed by the invention has the following advantages: (1) a direct transfer operation of electronic resources can be executed between security information interaction terminals (especially mobile terminals); and (2) a high safety and a high reliability are ensured.

While the invention has been described through the above preferred embodiments, the ways of implementing the same are not limited to the above embodiments. It will be appreciated that various modification and variations can be made to the invention by those skilled in the art without departing from the spirit and scope of the invention.

## Claims

1. A security information interaction method, including the following steps:
(A1) a first security information interaction terminal constituting a security information interaction request based on a security information interaction instruction from a resource transfer-out party and transmitting the security information interaction request to a second security information interaction terminal via a first communication channel, wherein the security information interaction request comprises the following information: the amount of electronic resources to be transferred and an electronic resource identifier of the resource transfer-out party;
(A2) the second security information interaction terminal processing the received security information interaction request and returning a security information interaction response based on the processing result, wherein the security information interaction response comprises an electronic resource identifier of the resource transfer-in party;
(A3) the first security information interaction terminal communicating with a first secure carrier based on the security information interaction response and via a second communication channel so as to constitute a security information interaction message, and transmitting the security information interaction message to a data processing server so as to complete a subsequent security information interaction procedure and achieve the transfer of electronic resources, wherein the security information interaction message comprises the information required for executing the subsequent security information interaction procedure.

2. A method according to claim 1, **characterized in that** the first communication channel is a communication channel based on near field communication protocol.

3. A method according to claim 2, **characterized in that** the first security information interaction terminal acquires the information required for executing the subsequent security information interaction procedure from the first secure carrier via the second communication channel.

4. A method according to claim 3, **characterized in that** the first security information interaction terminal and the second security information interaction terminal are both mobile terminals.

5. A method according to claim 4, **characterized in that** the step (A3) further includes: the data processing server analyzing the received security information interaction message and executing an offline verification and determination operation; if the result of the offline verification and determination operation is "approving the transfer of electronic resources to be executed", an approval response is returned to the first security information interaction terminal; otherwise, a rejection response is returned to the first security information interaction terminal.

6. A method according to claim 5, **characterized in that** the step (A3) further includes: if the approval response is received, the first security information interaction terminal conducts data communication with the first secure carrier via the second communication channel so as to execute the operation related to transfer-out of electronic resources in an offline manner and acquire a corresponding security information interaction certificate; and if a rejection response is received, the first security information interaction terminal terminates the security information interaction procedure and informs the user of the failure of security information interaction.

7. A method according to claim 6, **characterized in that** the step (A3) further includes: after the operation related to transfer-out of electronic resources is executed, the first security information interaction terminal transmits a transfer-out operation success response to the data processing server, wherein the transfer-out operation success response comprises the security information interaction certificate and the electronic resource identifier of the resource transfer-in party.

8. A method according to claim 7, **characterized in that** the step (A3) further includes: after receiving the transfer-out operation success response, the data processing server records the information related to current security information interaction and sets the status of this record to be "unfinished", and sends a security information interaction response to a first service provider server, wherein the security information interaction response comprises the information related to current security information interaction, and the data processing server then sends a resource transfer-in notification to the second security information interaction terminal.

9. A method according to claim 8, **characterized in that** the step (A3) further includes: after receiving the resource transfer-in notification, the second security information interaction terminal sends a security information interaction record enquiry/synchronization request to the data processing server so as to acquire the security information interaction record whose status is "unfinished".

10. A method according to claim 9, **characterized in that** the step (A3) further includes: after acquiring the security information interaction record whose status is "unfinished", the second security information interaction terminal sends a secure carrier electronic resource synchronization request to the data processing server for the security information interaction record whose status is "unfinished", wherein the secure carrier electronic resource synchronization request at least comprises electronic resource identifier of the resource transfer-in party.

11. A method according to claim 10, **characterized in that** the step (A3) further includes: after receiving the secure carrier electronic resource synchronization request, the data processing server sends a secure carrier electronic resource synchronization response to the second security information interaction terminal, wherein the secure carrier electronic resource synchronization response comprises the amount value of electronic resources to be transferred-in with a tamper-proofing protection.

12. A method according to claim 11, **characterized in that** the step (A3) further includes: after receiving the secure carrier electronic resource synchronization response, the second security information interaction terminal conducts data communication with a second secure carrier via a third communication channel so as to acquire the information related to electronic resource transfer-in, and then sends the information related to electronic resource transfer-in and the amount value of electronic resources to be transferred-in with a tamper-proofing protection to the data processing server.

13. A method according to claim 12, **characterized in that** the step (A3) further includes: after receiving the information related to electronic resource transfer-in and the amount value of electronic resources to be transferred-in with a tamper-proofing protection, the data processing server constitute an electronic resource transfer-in request message based on the information related to electronic resource transfer-in and the amount value of electronic resources to be transferred-in with a tamper-proofing protection, and sends the electronic resource transfer-in request message to a second service provider server.

14. A method according to claim 13, **characterized in that** the step (A3) further includes: after receiving the electronic resource transfer-in request message, the second service provider server executes a determination operation based on the electronic resource transfer-in request message; and if the result of the determination operation is "approving the transfer of electronic resources to be executed", an electronic resource balance value is extracted from the information related to electronic resource transfer-in, and then a new electronic resource balance value is calculated from the electronic resource balance value and the amount value of electronic resources to be transferred-in, and au updated script of the electronic resource balance value is generated based on the new electronic resource balance value, and then the updated script of the electronic resource balance value is sent to the data processing server.

15. A method according to claim 14, **characterized in that** the step (A3) further includes: after receiving the updated script of the electronic resource balance value, the data processing server forwards it to the second security information interaction terminal; after receiving the updated script of the electronic resource balance value, the second security information interaction terminal forwards it to the second secure carrier; and after receiving the updated script of the electronic resource balance value, the second secure carrier executes the updated script of the electronic resource balance value so as to update the electronic resource balance value, and sends the result of script execution back to the second security information interaction terminal.

16. A method according to claim 15, **characterized in that** the step (A3) further includes: after receiving the result of script execution, the second security information interaction terminal forwards it to the data processing server; after receiving the result of script execution, the data processing server forwards it to the second service provider server, and sends an electronic resource transfer success notification to the first security information interaction terminal.

17. A method according to claim 16, **characterized in that** the data processing server calculates a verification code for the amount of electronic resources to be transferred, and combines the verification code and the plain text of the amount of electronic resources to be transferred together so as to form the amount value of electronic resources to be transferred-in with a tamper-proofing protection.
